# EUROPEAN PATENT APPLICATION

(11) **EP 2 894 327 A1**
(43) Date of publication of application: **15.07.2015**
(21) Application number: 14197993.0
(22) Date of filing: 15.12.2014
(51) Int. Cl.: F03B 3/12, B23K 15/00, F03B 3/02

(54) **Method for fabricating a francis-type runner for a hydraulic machine, and runner fabricated using such a method**

(30) Priority: 08.01.2014 FR 1450121
(71) Applicant: ALSTOM Renewable Technologies, 38100 Grenoble (FR)
(72) Inventor: Rossi, Georges Auguste, 38330 Saint Ismier (FR); Rudelle, Guillaume, 38640 Claix (FR); Barthelet, Eric, 38000 Grenoble (FR); Meyniel, Stephane, 38100 Grenoble (FR); Mathieu, Louis, Tracy, Québec J3R5P9 (CA)
(74) Representative: Alstom Technology Ltd

(57) **Abstract**

This method relates to the fabrication of a Francis-type runner (1) for a hydraulic machine which comprises:
- a runner band (6) including at least two elements partially defining the runner band (6),
- a runner crown (4) including at least two elements partly defining the runner crown (4), and
- a plurality of blades (2) extending between the runner crown and the runner band, the blades (2) each being fitted in between two elements of the runner band (6) and between two elements of the runner crown (4).

The method comprises steps which are successive and in which:
- a) the blades (2), the elements of the runner band (6) and the elements of the runner crown (4) are fabricated separately, then
- b) all the elements of the runner band (6) are welded to the blades (2) using an electron beam welding method, then
- c) all the elements of the runner crown (4) are welded to the blades (2) using an electron beam welding method.

## Description

The present invention relates to a method for fabricating a Francis-type runner for a hydraulic machine, and to a runner fabricated by such a method.

Within the meaning of the present invention, a hydraulic machine may be a turbine, a pump, or a pump-turbine used, for example, in a hydroelectric power station.

The invention relates in particular to a Francis-type runner for a hydraulic machine through which a forced flow of water is intended to pass. Such a flow has the effect of driving the rotation of the runner, when the machine is a turbine. Such a flow is the result of this rotation, when the machine is in pump mode.

In the context of a hydraulic machine, it is known practice to use Francis-type runners which have a runner band, a runner crown and blades extending between the runner band and the runner crown.

A runner may be one-piece, usually cast or mechanically welded. As such a runner has imposing overall dimensions, the cost of producing same is not insignificant. Moreover, the fabrication of such a runner, on the one hand, requires increasingly scarce know-how and, on the other hand, presents health and safety problems because of the need for an operator to enter the waterways of the runner in order notably to perform the welding and grinding operations.

FR-A-2 935 761 discloses a method of fabricating a runner for a Francis turbine, the runner crown and the runner band of which are formed of several elements arranged between two consecutive blades. The blades are thus interposed between two consecutive runner crown and runner band elements and the edges of the blades lie flush with the exterior surface of the runner crown and runner band elements. Thus, an electron beam welding method can be used to assemble the blades with the runner crown and runner band elements. Other welding methods may be used in combination with the electron beam welding.

It is an object of the present invention to propose an improved method of fabrication able to guarantee a satisfactory level of quality of the runner and the fabrication of which can be industrialized with ease.

To this end, one subject of the invention is a method of fabricating a Francis-type runner for a hydraulic machine, comprising:
- a runner band with symmetry of revolution about a central axis of the runner, the runner band including at least two elements partially defining the runner band,
- a runner crown with symmetry of revolution about the central axis, the runner crown including at least two elements partly defining the runner crown, and
- a plurality of blades extending between the runner crown and the runner band, the blades each being fitted in between two elements of the runner band and between two elements of the runner crown.

The method comprises steps which are successive and in which:
- a) the blades, the elements of the runner band and the elements of the runner crown are fabricated separately, then
- b) all the elements of the runner band are welded to the blades using an electron beam welding method, then
- c) all the elements of the runner crown are welded to the blades using an electron beam welding method.

By virtue of the method for fabricating the runner according to the invention, the problems associated with quality, timescales and cost of production are all improved.

According to other advantageous features of the runner according to the invention, considered in isolation or in any technically permissible combinations:
- the blades lie flush with the exterior surfaces of the runner band and of the runner crown.
- during step b) and/or during step c) the electron beam is applied on the outside of the runner.
- during step b) a method of welding with the addition of filler material, notably of the TIG or MIG type, is also used for welding the elements of the runner band to the blades.
- during step c) a method of welding with the addition of filler material, is also used for welding the elements of the runner crown to the blades.
- during step b) and/or during step c) the welding with the addition of filler material precedes the electron beam welding.
- a first welded seam resulting from the welding with the addition of filler material is situated on the inside of the runner whereas a second welded seam resulting from the electron beam welding is situated on the outside of the runner.
- the welds involving an addition of filler material and the electron beam welds interpenetrate.
- the electron beam welds are complete joint penetration welds.

The invention also relates to a Francis turbine runner for a hydraulic machine which is fabricated using such a method.

The invention will be better understood from reading the following description of a Francis-type turbine runner and the method of fabricating same, which description is given solely by way of nonlimiting example and made with reference to the attached drawings in which:
- figure 1 is an axial section through a runner according to the present invention;
- figure 2 is a view of the runner of figure 1 from beneath;
- figures 3 to 8 are larger-scale partial sections of the runner of figures 1 and 2 on the line III-III in figure 2 and while the runner is in the process of being fabricated.

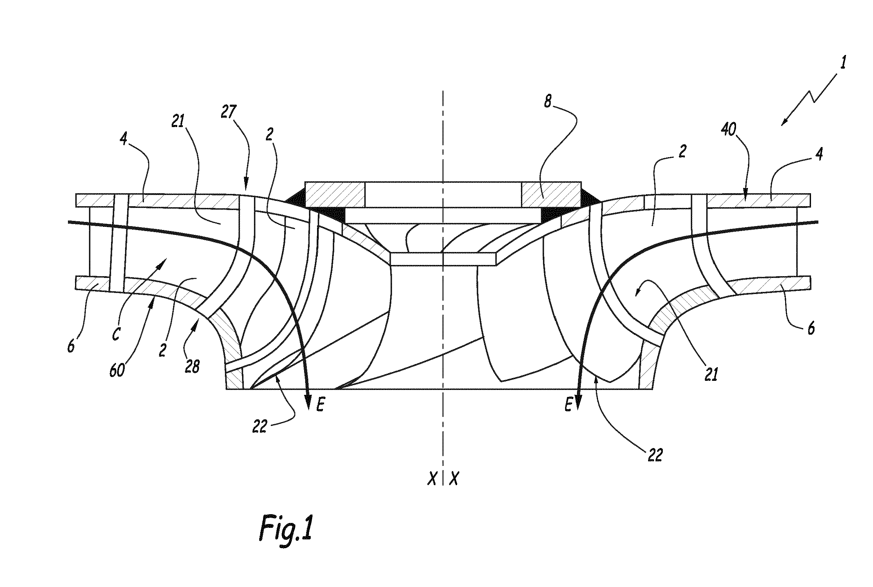

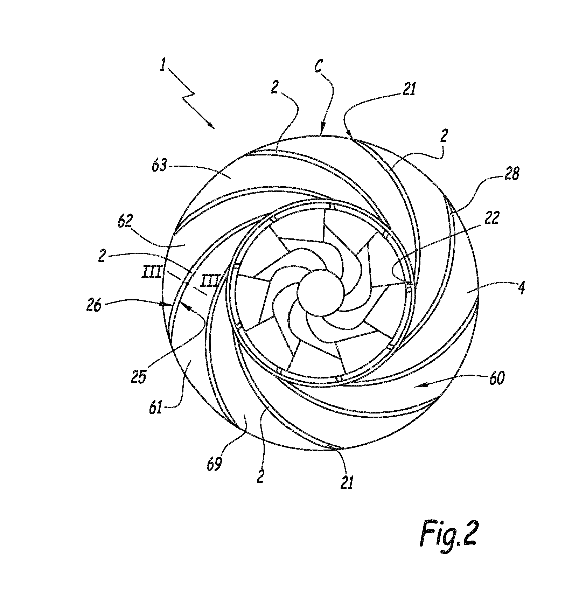

Figures 1 and 2 depict a Francis-type turbine runner 1 which rotates about a vertical axis X-X which is a central axis of the runner 1. A flow E from a pipe, not depicted, is intended to pass through the runner 1 in the direction of a draft tube, not depicted. The runner 1 comprises blades 2 which extend between a runner crown 4 and a runner band 6. These two bodies 4 and 6 have symmetry of revolution about the axis X-X. The blades 2 are evenly distributed about the axis X-X.

The runner 1 comprises a plate 8 for coupling the runner 1 to a shaft, not depicted, of the turbine. The plate 8 may be made either of sheet metal or as a casting. The plate 8 may then be welded to the other elements that make up the runner. The other elements of the runner 1 are made either of sheet metal or of forged metal or as castings.

The blades 2 are secured to the runner crown 4 and to the runner band 6 and are curved. The blades 2 each define a leading edge 21, facing toward the outside of the runner 1 in a radial direction of the runner 1, and a trailing edge 22 facing toward the axis X-X.

In this description, the terms "upper" and "lower" are defined with respect to the orientation of the axis X-X in figure 1, in which the runner crown 4 is situated at the top and the runner band 6 at the bottom. This orientation corresponds to the orientation that the runner 1 has in service.

The terms "inside" and "outside" are defined with respect to the waterways C each delimited between two blades 2, the runner crown 4 and the runner band 6. Thus, an inside element faces towards the inside of a waterway C, i.e. toward the empty volume through which the flow E passes, whereas an outside element faces towards the outside of a waterway C.

Each blade 2 comprises two curved lateral faces 25 and 26, one of them, 25, being concave and the other, 26, being convex. The lateral faces 25 and 26 extend lengthwise between the leading edge 21 and the trailing edge 22 and each delimit one side of a waterway C. The lateral faces 25 and 26 are joined together by an upper face 27 and a lower face 28 facing towards the outside of the runner 1, respectively upward and downward.

As depicted more specifically in figure 2, the runner band 6 comprises, in this example, nine distinct elements 61 to 69 which partially define the runner band 6 and which are each separated from each adjacent element by a blade 2. More specifically, each element 61 to 69 is separated from the two adjacent elements by lower and internal edges 24.1 and 24.2 of two consecutive blades 2. The edges 24.1 and 24.2 respectively form part of the lateral faces 25 and 26 of a blade 2 and are contiguous with the lower face 28 of the blade 2.

In other words, the runner band 6 is made up of nine elements 61 to 69 each arranged between the lower and internal edges 24.1 and 24.2 of consecutive blades 2. The edges 24.1 and 24.2 of the blades 2 are themselves engaged between the elements 61 to 69 that form the runner band 6.

In a similar way to the runner band 6, the runner crown 4 comprises nine distinct elements 41 to 49 which partially define the runner crown 4 and which are each separated from each adjacent element by a blade 2. More specifically, each element 41 to 49 is separated from the two adjacent elements by the upper and internal edges 23.1 and 23.2 of two consecutive blades 2. The edges 23.1 and 23.2 respectively form part of the lateral faces 25 and 26 of a blade 2 and are contiguous with the upper face 27 of the blade 2.

In other words, the runner crown 4 is made up of nine elements 41 to 49 each arranged between the upper and internal edges 23.1 and 23.2 of two consecutive blades 2. The edges 23.1 and 23.2 of the blades 2 are themselves engaged between the elements 41 to 49 that form the runner crown 4.

The upper face 27 of each of the blades 2 lies flush with the outside surface of the runner crown 4, which surface is formed by the respective upper surfaces 40 of the elements 41 to 49. Likewise, the lower face 28 of each of the blades 2 lies flush with the outside surface of the runner band 6, which surface is formed by the respective outside surfaces 60 of the elements 61 to 69.

The method of assembling the runner 1 comprises a preliminary step a), not depicted in the figures, in which the blades 2, the runner crown elements 41 to 49 and the runner band elements 61 to 69 are fabricated separately. In the preliminary step, these elements are then assembled with a view to welding, for example using a tool able to hold these elements and press them firmly together.

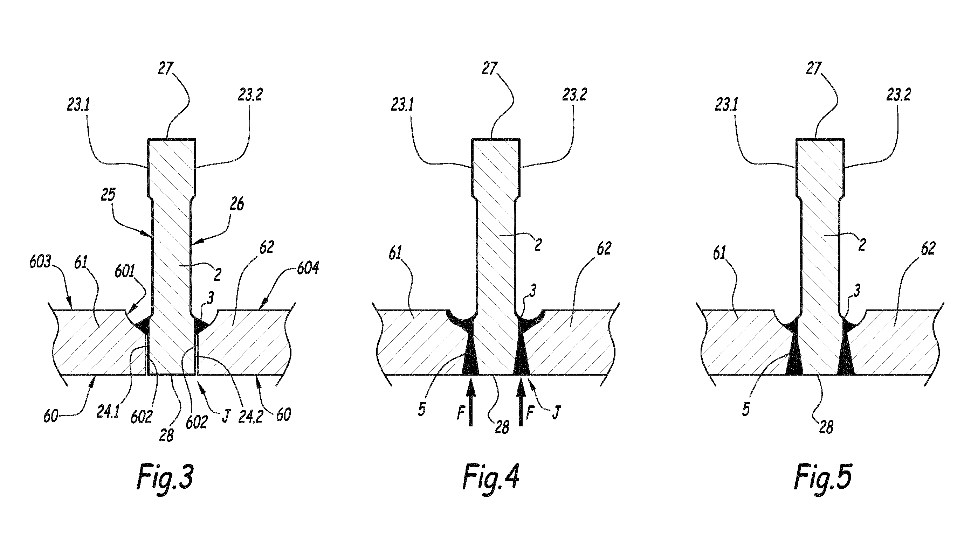

In a first welding step b) subsequent to the preliminary step and depicted in figures 3 to 5, all the elements 61 to 69 of the runner band 6 are welded to the blades 2 using an electron beam welding method which may be combined with other welding methods.

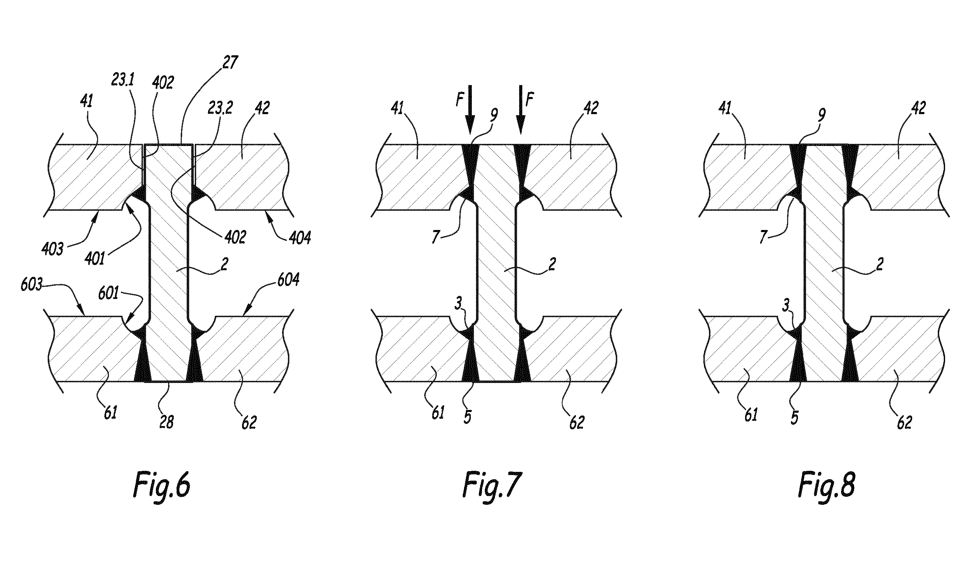

In a second welding step c) subsequent to the first welding step b) and depicted in figures 6 to 8, all the elements 41 to 49 of the runner crown 4 are welded to the blades 2 using an electron beam welding method which may be combined with other welding methods.

In an assembly step d) subsequent to the second welding step c), the last elements that make up the runner 1, namely the coupling plate 8 and the runner cone and seals, which have not been depicted, are assembled.

Steps a) to d) are successive, i.e. take place in an order from step a) to step d). In addition, the steps are consecutive, in other words when one step is in progress, the next step does not begin until the step in progress has been completed.

In a first substep a1) of the preliminary step a) the blades 2, the runner crown elements 41 to 49 and the runner band elements 61 to 69 and the coupling plate 8, the seals for the runner 1 and the runner cone are fabricated for example by cutting and forming sheet metal, by forging or by casting.

The elements 61 to 69 of the runner band 6 are dimensioned to compensate for the shrinkage caused by the subsequent welding of the elements 61 to 69 to the other parts of the runner 1.

In a second substep a2) of the preliminary step a), chamfers 401 and 601 are produced on two edge corners of each element 41 to 49 of the runner crown 4 and each element 61 to 69 of the runner band 6, these edge corners being intended to be positioned against the edges 23.1, 23.2, 24.1 and 24.2 of the blades 2 and on the inside of the waterways C. The chamfers 401 and 601 connect an inside surface 403, 404, 603 or 604 of each element 41 to 49 and 61 to 69 to a face 402 or 602 of this element, which face is intended to be welded to an edge 23.1, 23.2, 24.1 or 24.2 of a blade 2.

The inside surfaces 403, 404, 603 and 604 face toward the inside of the waterways C and are on the opposite side from the exterior surfaces 40 or 60.

In a third substep a3) of the preliminary step a) the welded joints J, i.e. the faces 23.1, 23.2, 24.1 and 24.2 of the blades 2 and the faces 402 and 602 of the elements 41 to 49 of the runner crown 4 and of the elements 61 to 69 of the runner band 6, which elements are intended to be assembled using a welded seam, undergo dye penetration inspection in order to detect any potential discontinuities there might be in the material.

In a fourth substep a4) of the preliminary step a), the elements 41 to 49 of the runner crown 4, the elements 61 to 69 of the runner band 6 and the blades 2 are assembled using removable means such as bosses and coupling studs, all mounted on a tooling fixture that allows the elements to be positioned relative to one another in order to obtain the geometry of the runner 1.

In an optional fifth substep a5) of the preliminary step a), shims, not depicted in the figures, are fitted in the welding joints J, between the elements 41 to 49 of the runner crown 4 and the blades 2 and between the elements 61 to 69 of the runner band 6 and the blades 2, in order to compensate for any potential lack of material. For preference, the shims are made of tapes made up of a metal alloy of the same grade as the elements that are to be welded.

The lack of material may also be compensated for during welding by supplying material in the form of filler wire.

In a sixth substep a6) of the preliminary step a), spacer pieces, not depicted in the figures, are placed between the blades 2, near the runner crown 4, to hold the blades 2 in position.

In a seventh substep a7) of the preliminary step a) hoops are fitted on the blades 2, against the upper face 27, in order to hold them in position during subsequent steps in the fabrication.

In an eighth substep a8) of the preliminary step, the elements 41 to 49 of the runner crown 4 are dismantled.

In a ninth substep a9) of the preliminary step a) the waterways C of the runner 1 undergo a dimensional check, for example using a laser tracker, a template or a 3D scan.

At the end of the preliminary step a), the assembly formed by the blades 2 and the elements 61 to 69 of the runner band 6 are ready to be welded together.

Substeps a1) to a8) are successive, i.e. are performed in order from substep a1) to substep a8). In addition, the substeps are consecutive, in other words, when a substep is in progress, the next substep does not begin until the substep in progress has been completed.

The first welding step b) comprises a first substep b1) visible in figure 3, in which a conventional welding method involving the addition of material, for example of the TIG or MIG type (methods 131, 132, 133 and 141 according to the international numerical classification in ISO 4063) is used to weld the elements 61 to 69 of the runner band 6 to the blades 2. A first welded seam 3 is thus produced between the blades 2 and the elements 61 to 69 of the runner band 6. The first welded seams 3 are positioned against the chamfers 601 of the elements 61 to 69 and against the lower and internal edges 24.1 and 24.2 of the blades 2.

In a second substep b2) of the first welding step b) the fillet radii where the blades 2 and the elements 61 to 69 of the runner band 6 are joined together are polished. In other words, some material is removed from the free surfaces of the first welded seams 3 in order to give these surfaces a rounded shape.

After this polishing, these welded seams 3 will undergo nondestructive testing.

In a third substep b3) of the first welding step b), the blades 2 are assembled with the elements 61 to 69 of the runner band 6 using electron beam welding. As depicted in figure 4, the electron beam F is applied to the outside of the runner band 6, i.e. to the same side as the outside surfaces 60 of the elements 61 to 69 of the runner band 6, or in other words to the outside of the waterways C, thus eliminating the constraints associated with the accessibility of the welding joints J.

The electron beam F causes surface fusion of the material of which the elements 61 to 69 of the runner band 6 and the blades 2 are made, such that when it cools, the molten material solidifies to form a second welded seam 5 which joins these elements together firmly, as shown in figure 4.

The second welded seam 5 is back-to-back with the first welded seam 3. The first welded seam 3 is situated on the inside of the waterways C, while the second welded seam 5 is situated on the outside. These welded seams 3 and 5 interpenetrate, or in other words, the upper end of the second welded seam 5 terminates within the material of the first welded seam 3. In other words, during the third substep b3), the electron beam F causes material that makes up the first welded joint 3 to melt.

In a fourth substep b4) of the first welding step b) the welded seams 3 and 5 are finished off by grinding.

In a fifth substep b5) of the first welding step b) the welded seams 3 and 5 undergo nondestructive testing, notably using ultrasound. Dye penetration inspection is performed.

In a sixth substep b6) of the first welding step b) a heat treatment in an oven is performed on the assembly formed by the blades 2 and the elements 61 to 69 of the runner band 6. In a seventh substep b7) of the first welding step b) the welded seams 3 and 5 undergo further nondestructive testing, notably using ultrasound and dye penetration inspection.

On completion of the first welding step b), assembly of the blades 2 with all the elements 61 to 69 of the runner band 6 is complete.

Substeps b1) to b7) are successive, i.e. are performed in order from substep b1) to substep b7). In addition, the substeps are consecutive, in other words, when a substep is in progress, the next substep does not begin until the substep in progress is complete.

The second welding step c) comprises a first substep c1) in which the elements 41 to 49 of the runner crown 4 are returned to their positions, then the spacer pieces and the hoops fitted previously in order to hold the blades 2 in place are removed. In a second substep c2) of the second welding step c), a dimensional check is performed on the waterway of the runner 1, for example using a laser tracker, a template or a 3D scan.

In a third substep c3) of the second welding step c) the welding joints J, i.e. the surfaces 23.1 and 23.2 of the blades 2 are polished.

In a fourth substep c4) of the second welding step c) the welding joints J undergo dye penetration inspection.

In a fifth substep c5) of the second welding step c) the elements 41 to 49 of the runner crown 4 are positioned on each side of the blades 2. If need be, shims are interposed between the blades 2 and the elements 41 to 49 of the runner crown 4.

In a sixth substep c6) of the second welding step c) the elements 41 to 49 of the runner crown 4 and the blades 2 are mechanically fixed in a removable manner, for example using bosses and coupling studs, everything mounted on a tooling fixture that allows the elements to be positioned relative to one another in order to obtain the geometry of the runner.

In a seventh substep c7) of the second welding step c) a conventional welding method with the addition of filler material of the TIG or MIG type is used to weld the elements 41 to 49 of the runner crown 4 to the blades 2. A third welded seam 7 is thus produced between the upper and internal edges 23.1 and 23.2 of the blades 2 and the elements 41 to 49 of the runner crown 4. The welded seams 7 are arranged against the chamfers 401 of the elements 41 to 49.

In an eighth substep c8) of the second welding step c) the assembly of blades 2 with the elements 41 to 49 of the runner crown 4 is electron-beam welded. As depicted in figure 7, the electron beam F is applied to the outside of the runner crown 7, i.e. to the same side as the outside surfaces 40 of the elements 41 to 49 of the runner crown 4 or, in other words, on the outside of the waterways C. A fourth welded seam 9 is thus formed.

The welded seam 7 lies back-to-back with the welded seam 9. These welded seams 7 and 9 interpenetrate.

In a ninth substep c9) of the second welding step c), as depicted in figure 8, the welded seams 7 and 9 are finished off and the fillet radii where the blades 2 and the elements 41 to 49 of the runner crown 4 meet are polished.

In a tenth substep c10) of the second welding step c) the welded seams 7 and 9 undergo nondestructive testing, notably using ultrasound, and the welded seams 7 and 9 undergo dye penetration inspection.

In an eleventh substep c11) of the second welding step c) a heat treatment is performed in an oven on the assembly formed by the blades 2, the elements 61 to 69 of the runner band 6 and the elements 41 to 49 of the runner crown 4.

In a twelfth substep c12) of the second welding step c) the welded seams 7 and 9 undergo further nondestructive testing, notably using ultrasound and dye penetration inspection.

On completion of the second welding step c), assembly of the blades 2 with all the elements 41 to 49 of the runner crown 4 and with the elements 61 to 69 of the runner band 6 is complete.

Substeps c1) to c12) are successive, i.e. take place in order from substep c1) to substep c12). In addition, the substeps are consecutive, or in other words when a substep is in progress, the next substep does not begin until the substep in progress is complete.

The assembly step d) comprises a first substep d1) in which a dimensional check is carried out on the assembly formed by the blades 2, the elements 41 to 49 of the runner crown 4 and the elements 61 to 69 of the runner band 6.

In a second substep d2) of the assembly step d), the upper seal, lower seal, coupling plate 8 and runner cone locations are machined.

In a third substep d3) of the assembly step d) the seals, coupling plate 8 and runner cone are assembled with the assembly formed by the blades 2, the runner crown 4 and the runner band 6, for example using an electron beam welding method or some other conventional welding method.

In a fourth substep d4) of the assembly step d) these welds undergo nondestructive testing, notably using ultrasound, and the welded seams obtained undergo dye penetration inspection.

In a fifth substep d5) of the assembly step d), the assembly formed by the blades 2, the runner crown 4, the runner band 6, the seals, the coupling plate 8 and the runner cone is heat treated in an oven.

In a sixth substep d6) of the assembly step d) the dimensions of this assembly are once again checked nondestructively, notably by ultrasound.

On completion of the assembly step d), the fabrication of the runner 1 is complete.

Substeps d1) to d6) are successive, i.e. take place in order from substep d1) to substep d6). In addition, the substeps are consecutive, in other words when a substep is in progress, the next substep does not begin until the substep in progress is complete.

According to the method of the invention and quite unlike the known fabricating methods, the blades 2 are assembled with the runner band elements 61 to 69 first and then with the runner crown elements 41 to 49, making quality of fabrication more dependable. This is because the runner band 6 is generally more skewed than the runner crown 4, making the runner band 6 difficult to access. By welding the blades 2 to the runner band elements 61 to 69 first of all, the operator assembling the runner 1 has easier access to the inside of the runner 1.

Moreover, the greatest mechanical stresses are located at the runner band 6. By welding the blades 2 to the runner band 6 first, the quality of the welds between the blades 2 and the runner band 6 is safeguarded.

In an alternative form of the invention, use is made only of an electron beam F welding method for assembling the blades 2 with the elements 41 to 49 of the runner crown 4 and with the elements 61 to 69 of the runner band 6. In that case, the welds are complete joint penetration welds, i.e. the welded seams 5 and 9 penetrate right through to the other side of the welding joints J.

In the context of the invention, the number of elements 41 to 49 and 61 to 69 of which the runner crown 4 and the runner band 6 are made can vary, the runner 1 comprising at least two runner crown elements 4 and two runner band elements 6.

The invention has been described in the case of a turbine runner 1 but the runner 1 may also be used for a pump or even a pump-turbine. In the case of a runner for a pump or a pump-turbine, the direction of flow E is the opposite in pump mode.

Furthermore, in the context of the invention, the alternative forms described may be combined with one another.

## Claims

1. A method of fabricating a Francis-type runner (1) for a hydraulic machine, comprising:
- a runner band (6) with symmetry of revolution about a central axis (X-X) of the runner, the runner band (6) including at least two elements (61-69) partially defining the runner band (6),
- a runner crown (4) with symmetry of revolution about the central axis (X-X), the runner crown (4) including at least two elements (41-49) partly defining the runner crown (4), and
- a plurality of blades (2) extending between the runner crown and the runner band, the blades (2) each being fitted in between two elements (61-69) of the runner band (6) and between two elements (41-49) of the runner crown (4),
the method comprising steps which are successive and in which:
- a) the blades (2), the elements (61-69) of the runner band (6) and the elements (41-49) of the runner crown (4) are fabricated separately, then
- b) all the elements (61-69) of the runner band (6) are welded to the blades (2) using an electron beam (F) welding method, then
- c) all the elements (41-49) of the runner crown (4) are welded to the blades (2) using an electron beam (F) welding method.

2. The method as claimed in claim 1, **characterized in that** the blades (2) lie flush with the exterior surfaces (40, 60) of the runner band (6) and of the runner crown (4).

3. The method as claimed in claim 1 or 2, **characterized in that** during step b) and/or during step c) the electron beam (F) is applied on the outside of the runner (1).

4. The method as claimed in one of the preceding claims, **characterized in that** during step b) a method of welding with the addition of filler material, notably of the TIG or MIG type, is also used for welding the elements (61-69) of the runner band (6) to the blades (2).

5. The method as claimed in one of the preceding claims, **characterized in that** during step c) a method of welding with the addition of filler material is also used for welding the elements (41-49) of the runner crown (4) to the blades (2).

6. The method as claimed in one of claims 4 and 5, **characterized in that** during step b) and/or during step c) the welding with the addition of filler material precedes the electron beam welding.

7. The method as claimed in one of claims 4 to 6, **characterized in that** a first welded seam (3, 7) resulting from the welding with the addition of filler material is situated on the inside of the runner (1) whereas a second welded seam (5, 9) resulting from the electron beam (F) welding is situated on the outside of the runner (1).

8. The method as claimed in one of claims 4 to 7, **characterized in that** the welds involving an addition of filler material and the electron beam welds interpenetrate.

9. The method as claimed in one of claims 1 to 3, **characterized in that** the electron beam welds are complete joint penetration welds.

10. A Francis turbine runner (1) for a hydraulic machine, **characterized in that** it is fabricated using a method as claimed in one of the preceding claims.
